(19) Europäisches Patentamt
European Patent Office
Office européen des brevets

(11) Publication number: 0 316 112 A2

# (12) EUROPEAN PATENT APPLICATION

(21) Application number: 88310337.6

(51) Int. Cl.4: G10L 5/06

(22) Date of filing: 03.11.88

(30) Priority: 05.11.87 US 116991

(43) Date of publication of application:
17.05.89 Bulletin 89/20

(84) Designated Contracting States:
ES FR GB IT

(71) Applicant: AMERICAN TELEPHONE AND TELEGRAPH COMPANY
550 Madison Avenue
New York, NY 10022(US)

(72) Inventor: Rabiner, Lawrence Richard
58 Sherbrook Drive
Berkeley Heights New Jersey 07922(US)
Inventor: Soong, Frank Kao-Ping
15 Robin Road
Fanwood New Jersey 07023(US)
Inventor: Wilpon, Jay Gordon
75 Round Top Road
Warren New Jersey 07060(US)

(74) Representative: Watts, Christopher Malcolm Kelway et al
AT&T (UK) LTD. AT&T Intellectual Property Division 5 Mornington Road
Woodford Green Essex IG8 OTU(GB)

## (54) Use of instantaneous and transitional spectral information in speech recognizers.

(57) Any of several prior art word recognizers are improved by changing the speech analysis portion thereof to include a more comprehensive spectral representation which can be characterized as two-dimensional. The first dimension is the "freeze-frame" or instantaneous sample of the spectral characteristics as derived from a typical 45 millisecond sample of the speech to be recognized. The second dimension, in a sense orthogonal to the first, spans several such time frames or samples and yields what amounts to a time derivative of the spectral properties obtained in the current time frame. In the testing or processing of the input speech in comparison to the reference patterns, essentially equal weight or effectiveness is attributed to both parts of the two dimensional reference spectral pattern and to both parts of the input speech spectral pattern. That is, equal importance is attributed to the essentially instantaneous information and the time-derivative information spanning a plurality of neighboring time frames including the frame of interest.

Also disclosed are the use of cepstral information and time-derivative cepstral information derived from linear prediction coefficient methods and the use specifically in connected-word recognizers using level-building concepts, or in those using two-stage processing.

EP 0 316 112 A2

Xerox Copy Centre

# USE OF INSTANTANEOUS AND TRANSITIONAL SPECTRAL INFORMATION IN SPEECH RECOGNIZERS

## Field of the Invention

This invention relates to speech recognizers, particularly connected-word speech recognizers.

## Background of the Invention

Small to medium vocabulary word recognizers are now significant commercial products. For example, they are used in systems for checking bank balances and in various other carefully defined task-oriented environments.

Such speech recognizers have generally followed one of just a few lines of development, e.g., word-based recognizers and phoneme-based recognizers.

In improving such systems there are a wide variety of research efforts which suggest directions to take to achieve the kinds of performance that customers expect. Selecting the avenues for improvement, nevertheless, is not a trivial problem. Experience has shown that one of the most significant parameters of commercial systems is the error rate because it has far reaching significance in the application of such systems. It has also been found that the typical improvement will yield a minor reduction in the error rate. For example, in the system that has 90% accuracy or a 10% error rate, a typical improvement might reduce the error rate to 8%. Consequently, improvements which eliminate half or more of the existing error rate in a particular system are very noteworthy, indeed.

## Summary of the Invention

According to our invention, any of several prior art word recognizers are improved by changing the speech analysis portion thereof to include a more comprehensive spectral representation which can be characterized as two-dimensional. The first dimension is the "freeze-frame" or instantaneous sample of the spectral characteristics as derived from a typical 45 millisecond sample of the speech to be recognized. The second dimension, in a sense orthogonal to the first, spans several such time frames or samples and yields what amounts to a time derivative of the spectral properties obtained in the single time frame.

While such a concept has been used in the essentially simpler task of speaker recognition, as described in the article "On the Use of Instantaneous and Transitional Spectral Information in Speaker Recognition," by one of us, F.K. Soong, with A.E. Rosenberg, there was no reason to expect the dramatic improvement in results which we have now discovered can be obtained when a related technique is used in virtually any one of the existing speech recognizers, including connected-word speech recognizers. Unexpectedly, at least for those recognizers having connected-word vocabularies up to about 150 words, both speaker-independent and speaker-trained, the reduction in the error rate is always greater than 50%. We know of no other prior improvement in speech recognizers which has been as generically applicable or has yielded such a uniformly high reduction in error rate.

According to a first specific feature of our invention, the transitional information is not only derived for the input speech but is also prepared and recorded in advance for the reference patterns used in testing the input speech. Indeed, the spectral information used for reference is now typically twice as much as well as twice as informative, for each sample of the reference. And in the testing or processing of the input speech in comparison to the reference patterns, essentially equal weight or effectiveness is attributed to both parts of the two dimensional reference spectral pattern and to both parts of the input speech spectral pattern. That is, equal importance is attributed to the essentially instantaneous information and the time-derivative information spanning a plurality of neighboring time frames including the fram of interest.

Other specific features of the invention relate to the use of cepstral information derived from linear prediction coefficient methods and to the use of the invention in connected-word recognizers for which level-building concepts are particularly important. We have found that the two-dimensional cepstral-type information works particularly harmoniously with LPC methods and the so-called level-building methods.

## Brief Description of the Drawing

Further features and advantages of our invention will become apparent from the following detailed description taken together with the drawings in which:

FIG. 1 is a block diagram of a preferred embodiment of our invention;

FIG. 2 is a flow diagram pertaining to the operation of the embodiment of FIG. 1;

FIG. 3 shows curves which are useful in explaining the mode of operation of the embodiment of FIG. 1; and

FIG. 4 is a block diagram of an alternative embodiment of the invention.

## General Description

Short-time spectral representation of speech signals has long been used in speech coding, speech recognition, speech synthesis and speaker recognition. One of the most popular representations is the Linear Predictive Coding (LPC) parameter set. The spectral envelope of a short-time spectrum is efficiently parametrized by the LPC coefficients. The most salient spectral features of speech, the spectral peaks or the so-called "formants", are represented by LPC coefficients with very high fidelity. This representation has been successfully applied to the above-mentioned commercial uses.

However, despite the success of LPC in coding, recognition and synthesis, the representation does suffer from some intrinsic inadequacy in representing the dynamic evolution of speech spectra. The LPC parameters can at most provide us some "snap-shots" of the dynamic history of the whole speech production process. The LPC spectral analysis procedure, being affected by the analysis window size, position as well as the excitation, is not noise free and some artifacts can occur. In the transitional region of speech sounds, the analysis is more prone to error than in the steady-state regions such as sustained vowel or fricative sounds.

To overcome the above disadvantages, we propose a new two-dimensional (2-D) view of the total spectral variations. For best results, we use the LPC-derived cepstral coefficients to illustrate this 2-D approach. Similar representation can be applied to other parameter sets such as the LPC parameters with, perhaps, some drawbacks or loss of some geometric intuition because of the non-Euclidean nature of the corresponding spectral representation.

First the cepstral coefficients are generated from the LPC coefficients using the well-known recursion formula.

$$c_0 = \log\sigma^2$$

$$c_k = -a_k - \sum_{i=1}^{k-1} a_i c_{k-i} \frac{(k-i)}{k} \qquad 1 \leq k \leq p$$

$$c_k = -\sum_{i=1}^{p} a_i c_{k-i} \frac{(k-i)}{k} \qquad p < k$$

where $a_i$, $1 \leq i \leq p$, are the LPC coefficients and $\sigma^2$ is the LPC gain. The log power spectrum of speech signals at time t, $\log S(\omega,t)$, is represented by the cepstral coefficients as

$$\log S(\omega,t) = \sum_{m=-\infty}^{\infty} c_m(t) e^{-j\omega m}$$

The spectral slope of $\log S(\omega,t)$, which has been shown to be one of the most relevant features, both subjectively in human perception and objectively in automatic speech recognition, of a speech spectrum can be similarly represented by the quefrency weighted cepstral coefficients as

$$\frac{\partial \log S(\omega,t)}{\partial \omega} = \sum_{m=-\infty}^{\infty} - jmc_m(t)e^{-j\omega m}$$

The spectral change in time can be represented as

$$\frac{\partial \log S(\omega,t)}{\partial t} = \sum_{m=-\infty}^{\infty} \frac{\partial c_m(t)}{\partial t} e^{-j\omega m}$$

The differentiation, commonly approximated by a corresponding first order difference between adjacent samples, i.e., $c_m(t+\Delta) - c_m(t)$, is inherently noisy. To overcome the noise problem associated with both the finite difference approximation and the artifacts of the LPC analysis procedure, we use a Least-Squares curve fitting approach to characterize the essence of the spectral dynamics. The orthogonal polynomials we use here are just for illustration purposes, other different orthogonal polynomials such as Legendre polynomials, etc., can be similarly applied.

Since it is believed that the speech production process is constrained by the mass inertia, muscle tensions as well as other physical parameters of human articulators, the inter and intra-sound spectral transitions cannot have very high frequency components. Since the zero-th, first-order and second-order orthogonal polynomials correspond to the average, the slope and the curvature of a series of speech spectra within a finite time duration, sliding time window should be adequate to characterize the major part of spectral transitions. The polynomial coefficients of the zero-th, first-order polynomials are listed as follows: Zero-th order polynomial coefficient

$$\bar{c}_m(0) = \frac{1}{2N+1} \sum_{t=-N}^{N} c_m(t)w(t)$$

First order polynomial coeficient

$$\Delta c_m(0) = \frac{\sum_{t=-N}^{N} tw(t)\ c_m(t)}{\sum_{t=-N}^{N} t^2\ w(t)}$$

and
Second order coefficient

$$\Delta^2 c_m(0) = \frac{\sum_{t=-N}^{N} w(t)\ c_m(t)\ (t-\frac{1}{12}((2N+1)^2-1)}{\sum_{t=-N}^{N} \left[t-\frac{1}{12}(2N+1)^2-1\right]^2 w(t)}$$

$$\bar{c}_m(t) = c_m(t) + \Delta c_m(t)t + \Delta^2 c_m(t) \left[t-\frac{1}{12}\ (2N+1)^2-1\right]^2 + \cdots$$

The gain or speech energy, being one of the major prosodic cues in human speech perception, can be similarly characterized by the corresponding orthogonal polynomials. With the parametric representation of the 2-D spectral evolution, the corresponding spectrogram is more precisely characterized by its sampled values: $\log S(\omega,t)$, the derivatives in frequency

$$\frac{\partial \log S(\omega,t)}{\partial \omega}$$

and the derivatives (and higher order derivatives, if needed) in time

$$\frac{\partial \log S(\omega,t)}{\partial t}.$$

The log energy (or power) of speech signals can also be characterized by the sample values as well as the orthogonal polynomial coefficients.

## Detailed Description

In the embodiment of FIG. 1, input utterances are received at point 11, at which an electroacoustic transducer may be placed, if the utterances are in acoustic form. The resulting electrical signals, representing the utterances are then filtered and sampled in circuit 13; and then the samples are converted to trains of binary pulses in analog-to-digital converter 15. Filter and sample circuit 13 and A/D converter 15 are of conventional type for speech processing.

The digital signal is then processed in LPC feature signal generator and endpoint detector 17, which is particularly of the type generating cepstral-type signals. As is well-known in the speech processing art, a cepstrum, or cepstral signal, is derived by taking a fourier transform of a log-magnitude frequency spectrum of a speech signal. The log-magnitude versus frequency signals used in the speech processing art are themselves short-time Fourier transforms (over a finite time "window", e.g., 45 milliseconds) of a suitable representation of amplitude vs. time for the speech signal waveform.

The log-magnitude vs. frequency signals of interest for cepstral transformation are those which represent spectral features of speech in a conventional Linear Prediction Coefficient analysis (LPC analysis) of the input speech.

For the analysis described so far, LPC feature signal generator and endpoint director 17 may be of the type described in the copending patent application of two of us, L.R. Rabiner and J.G..Wilpon, with T.B. Martin, Serial No. 669,654, filed November 8, 1984, and assigned to the assignee hereof. The cepstral coefficients are derived from the LPC coefficients in a straight-forward way by the recursion formulas set out above as equations 1 and 2.

Such equipment is modified to produce the time-derivative cepstral signal, comprising including temporary signal stores for the cepstral signals for the N preceding, N following time frames and the current frame with a typical time span of 50-100 ms plus a time-derivative circuit for generating the time derivative cepstral signals as the quotient of the signal changes and the related time periods from the fram of interest to those adjacent frames.

The resulting cepstral feature signals are stored in the feature signal store 25 in fields twice as long as those typically required for feature signals, because in each field in addition to the current-frame feature signal (the "instantaneous" feature signal) there is the time-derivative feature signal.

The reference pattern signal store includes similar signals representing all states in all reference words to which the system is to respond, as derived by the segmental K-means training procedure described in the article "A Segmental K-means Training Procedure for Connected Word Recognition", by two of us, Lawrence R. Rabiner and Jay G. Wilpon, with Biing-Hwang Juang, in the AT&T Technical Journal, Vol. 65, May/June 1986, pp. 21-31. Here again, the time-derivative cepstral signal is included in each field of the store, as described above. It can be derived as a time-derivative signal based on differences in the "instantaneous" value portions of the signals for the N adjacent preceding and following time frames of the reference signal.

The comparison of the feature signals for the input speech and for reference states and words occurs in processor circuit 19 according to the so-called Markov model decision making procedures described in the copending patent application of B-H Juang, et al., patent application Serial No. 714,517, filed March 21, 1985.

As described in that patent application, program control instructions are passed from control program store 31 to processor 19 via interface bus 21, along which signals can pass in either direction.

Control-program store 31 illustratively includes the level-building-related control 33 for connected word recognition applications, inasmuch as the preferred embodiment of our invention employs the level-building technique of U.S. Patent No. 4,400,788 to C.S. Myers, et al. In this context "level" refers to a location in a sequence of states of words involved in a connected-word-recognition process. It is now known to employ such a level-building technique together with the decision-making processing that resolves states of a so-called Hidden Markov model.

Random access memory circuit 29 provides temporary storage for results, including intermediate results, obtained in processor circuit 19.

The final results of the recognition process are then passed by interface bus to utilization circuit 33, which, for example, could be a printed word display on a computer monitor, a printer for providing a hard-copy printed output or an audio feedback device.

As may be seen in the flow diagram of FIG. 2, which applies to the actual operation of the embodiment of FIG. 1, the introduction of the time-derivative cepstral feature does not change the basic processing steps, as compared to the recognizer (of the above-referenced B-H. Juang et al. application) not using the time-derivative cepstral feature signal information.

It is because recognizer systems are so transparent to this added feature that our invention gives such a great improvement in results for nearly all speech recognizers, typically a reduction in error rate of 50% or more.

The way in which the decision-making processing of the dynamic programming based recognition algorithm such as the so-called dynamic time warping (DTW) or hidden markov model (HMM) recognition takes into account differences in speaking rate and articulation may be made intuitively clear from the diagram of FIG.3.

The time frames for the input speech are plotted on the horizontal axis and the successive time frames for a typical set of reference signals are shown on the vertical axis.

In the process of achieving the best match between the current input time-frame and the states of the model, the reference model can either move forward to the next state or remain unchanged in the same state. This apparently variable state-changing rate accommodates an adjustment for variation in speaking rate or articulation qualitatively similar to that of dynamic time warping, but is usually less exhaustive of computing power for a speech recognition application.

For ease of illustration and understanding, the log-magnitude of LPC spectrum versus frequency (resulting from short-time Fourier transform of the LPC filter) are shown along the axes of FIG. 3 for respective input speech time frames and reference time frames.

With respect to our invention, a scan of the feature signals plotted for each time frame of each axis can perhaps yield an intuitive appreciation of why the time-derivative feature signal is useful to provide a more complete 2-dimensional description of the spectral evolution of speech signals, hence so effective in reducing error rate, even though we are not viewing the actual cepstral feature and the time-derivative cepstral signals.

Without wishing to limit our invention to this explanation, we suggest that awareness of the two-dimensional terrain represented by the successive feature signals will always yield an advantage, as compared to the single-time frame feature signal. The effect is one of anticipating the future spectral evolution in the feature signals before the system has to make a best-match decision for a single time frame.

If, in fact, we are talking about different articulations of the same word, any slow, or fast, or even abrupt spectral changes in the state-to-state progression of line 301 can be well accommodated. The actual illustration of FIG. 3 is for different articulations of the letter "x", the reference one including a glottal stop in the middle.

It should also be apparent that our invention could be applied with the log-amplitude vs. frequency feature signals of the type actually shown in FIG. 3 as well as with cepstral type signals.

An alternative embodiment of the invention using the "instantaneous" and time-derivative ("transitional") spectral feature is shown in FIG.4.

In this case, our invention is applied to the speech recognizer disclosed in EP-A-0285353.

The significant difference with respect to the embodiment of FIG. 1 is that the alignment circuit 1342 in processor circuit 1340 introduces two-stage processing, because the re-comparison of tentative decisions with the input speech features might be thought to mask the effects of using time-derivative information according to our invention.

Surprising, such a masking effect does not occur, and the reduction in error rate is still typically of the order of 50%.

It should be clear that such reductions in speech recognition error rates have great significance in the commercial application thereof, and will stimulate the application of our invention in many other types of speech recognizers, for example, those employing dynamic time warping.

## Claims

1. A speech recognition system of the type comprising means for storing reference patterns derived from speech in a form useful for comparison with a like form derived from speech to be recognized,
means for deriving from the speech to be recognized patterns in the like form with regard to the reference patterns, and
means for processing the respective patterns to generate probable matches of the patterns, and
means for indicating recognized words for utilization,
said system BEING CHARACTERIZED IN THAT
the storing means includes means for storing in an associated form sets of patterns having both data from a single time frame of the detected speech and transitional data spanning a plurality of neighboring time frames including the current frame,
the deriving means comprises means for deriving, in an associated form, sets of patterns having both data from a single time frame of the detected speech, and transitional data spanning a plurality of neighboring time frames including the single time frame, and
the processing means includes means for giving equivalent weight to both single time frame data and transitional data in obtaining probable recognized words.

2. A speech recognition system of the type claimed in claim 1,
said system BEING FURTHER CHARACTERIZED IN THAT
the storing means includes means for storing, and the deriving means includes means for deriving, sets of patterns including as the transitional data respective time-derivative data centered on the respective single frames, wherein the time-derivative data depends in part on data from one or more neighboring time frames.

3. A speech recognition system of the type claimed in claim 1, said system BEING FURTHER CHARACTERIZED IN THAT
the means for storing the reference patterns comprises means for deriving spectral features by Linear Prediction Coefficient methods the single-time-frame data comprising cepstral information and the transitional data comprising time-derivative cepstral information characterizing the neighborhood of related single-time-frame data,
the means for deriving patterns from the speech to be recognized comprises means for deriving spectral features by Linear Prediction Coefficient (LPC) methods, the single-time-frame data comprising cepstral information, and the transitional data comprising time-derivative cepstral information characterizing the neighborhood of the related single-time-frame data, and
the means for processing the respective patterns includes means for applying the single-time-frame cepstral information and the time-derivative cepstral information equally effectively, to improve the likelihood of accuracy in recognizing words for utilization.

4. A speech recognition system of the type claimed in claim 3, said system BEING FURTHER CHARACTERIZED IN THAT
the means for storing reference patterns comprises means for storing such patterns derived by a segmental training procedure from samples of connected-word speech,
the means for deriving patterns from the speech to be recognized is adapted to act upon connected-word speech, and
and the means for processing the respective patterns is adapted to apply both the cepstral information and the time-derivative cepstral information effectively in each level of a level-building process.

FIG. 1

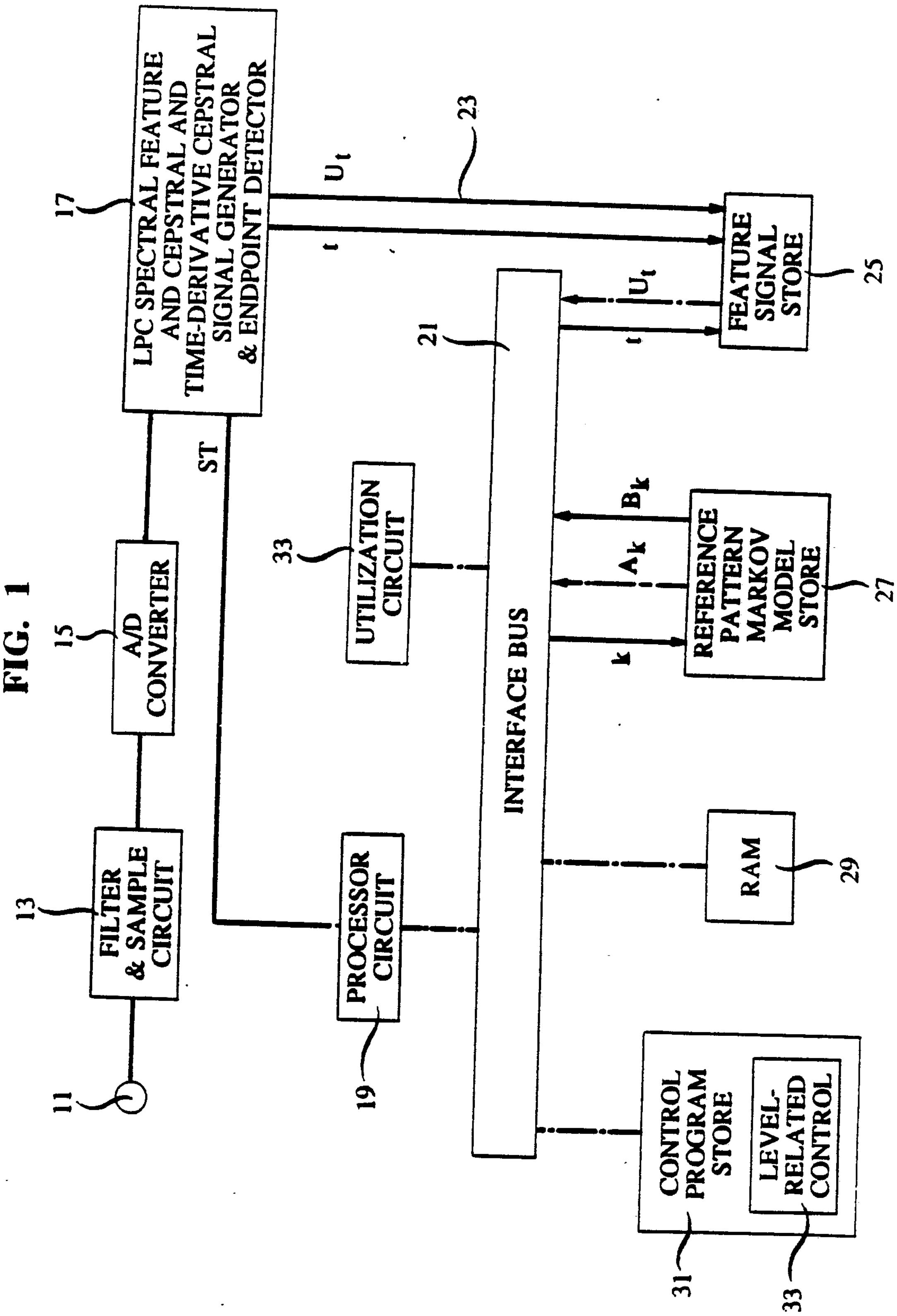
11
13
FILTER & SAMPLE CIRCUIT
15
A/D CONVERTER
17
LPC SPECTRAL FEATURE AND CEPSTRAL AND TIME-DERIVATIVE CEPSTRAL SIGNAL GENERATOR & ENDPOINT DETECTOR
ST
$U_t$
t
23
19
PROCESSOR CIRCUIT
33
UTILIZATION CIRCUIT
21
INTERFACE BUS
$U_t$
t
FEATURE SIGNAL STORE
25
$B_k$
$A_k$
k
REFERENCE PATTERN MARKOV MODEL STORE
27
RAM
29
CONTROL PROGRAM STORE
LEVEL-RELATED CONTROL
31
33

FIG. 2

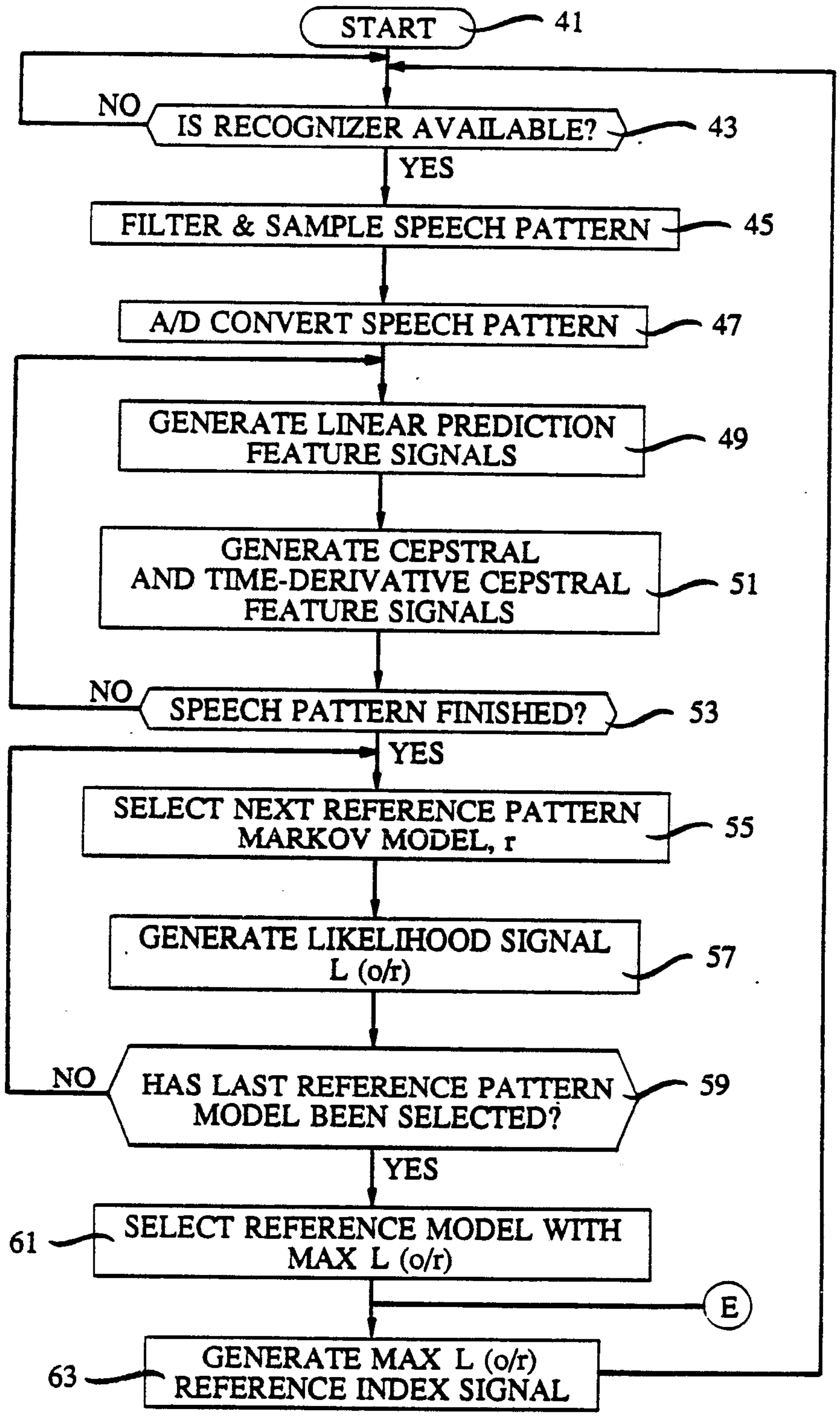
START
41
NO
IS RECOGNIZER AVAILABLE?
43
YES
FILTER & SAMPLE SPEECH PATTERN
45
A/D CONVERT SPEECH PATTERN
47
GENERATE LINEAR PREDICTION FEATURE SIGNALS
49
GENERATE CEPSTRAL AND TIME-DERIVATIVE CEPSTRAL FEATURE SIGNALS
51
NO
SPEECH PATTERN FINISHED?
53
YES
SELECT NEXT REFERENCE PATTERN MARKOV MODEL, r
55
GENERATE LIKELIHOOD SIGNAL L (o/r)
57
NO
HAS LAST REFERENCE PATTERN MODEL BEEN SELECTED?
59
YES
61
SELECT REFERENCE MODEL WITH MAX L (o/r)
E
63
GENERATE MAX L (o/r) REFERENCE INDEX SIGNAL

FIG. 3

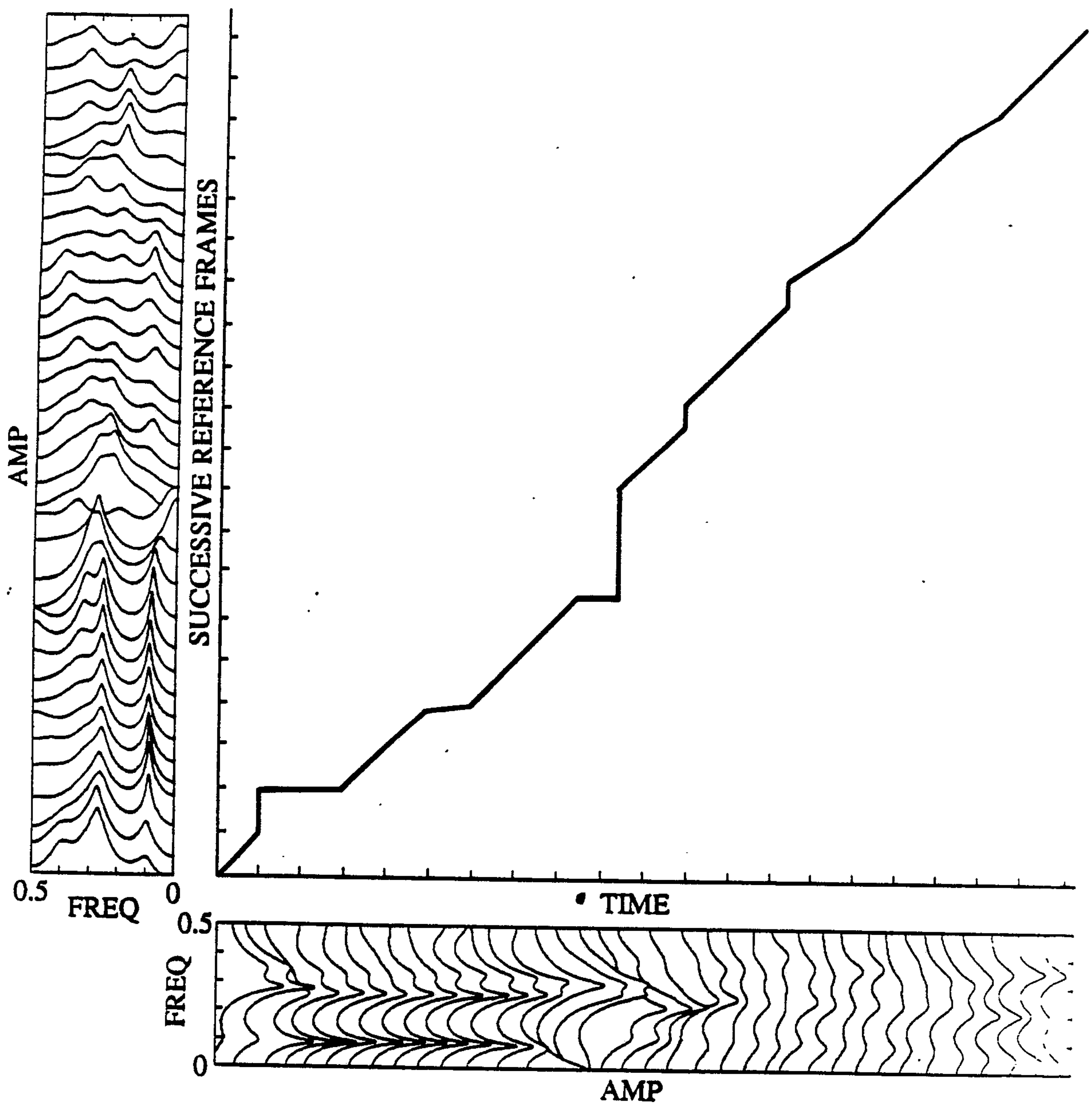

FIG. 4

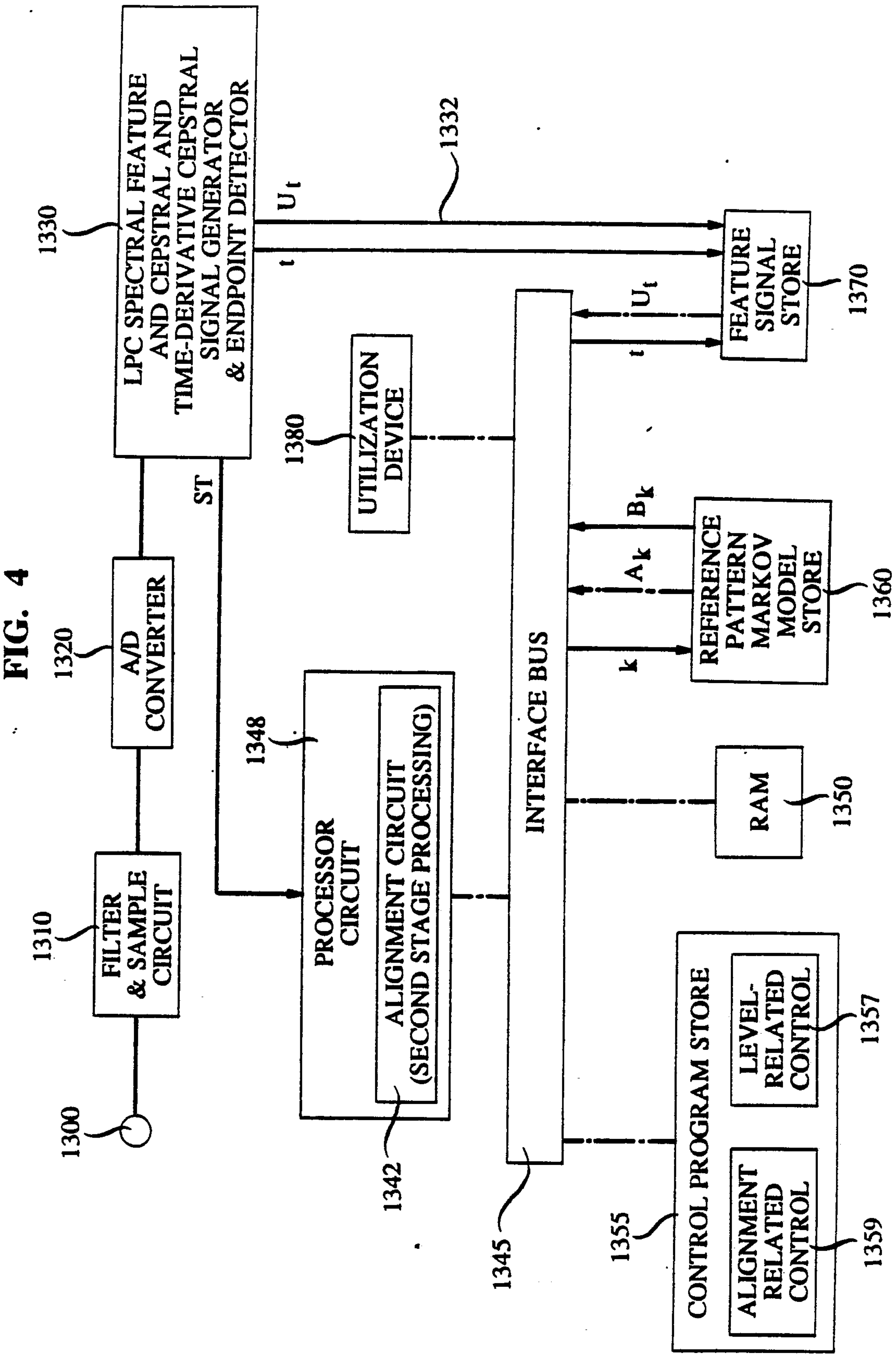

1300
1310
FILTER & SAMPLE CIRCUIT
1320
A/D CONVERTER
1330
LPC SPECTRAL FEATURE AND CEPSTRAL AND TIME-DERIVATIVE CEPSTRAL SIGNAL GENERATOR & ENDPOINT DETECTOR
ST
1332
$U_t$
t
1370
FEATURE SIGNAL STORE
1380
UTILIZATION DEVICE
1348
PROCESSOR CIRCUIT
ALIGNMENT CIRCUIT (SECOND STAGE PROCESSING)
1342
INTERFACE BUS
1345
$B_k$
$A_k$
k
REFERENCE PATTERN MARKOV MODEL STORE
1360
RAM
1350
CONTROL PROGRAM STORE
1355
LEVEL-RELATED CONTROL
1357
ALIGNMENT RELATED CONTROL
1359